# EUROPÄISCHE PATENTSCHRIFT

(11) **EP 1 004 158 B1**
(45) Veröffentlichungstag und Bekanntmachung des Hinweises auf die Patenterteilung: **29.11.2006**
(21) Anmeldenummer: 99938171.8
(22) Anmeldetag: 08.06.1999
(51) Int. Cl.: H02B 1/00

(54) **EIN- UND AUSFAHRBARES SCHALTGERÄT MIT EINER ALS SCHUTZ GEGEN EINE FEHLBEDIENUNG VORGESEHENEN SPERRSTANGE**
INSERTABLE AND RETRACTABLE SWITCHING DEVICE COMPRISING A BLOCKING BAR WHICH PREVENTS WRONG OPERATION
APPAREIL DE COMMUTATION INSERABLE ET RETIRABLE COMPORTANT UNE BARRE DE BLOCAGE EMPECHANT UNE FAUSSE MANOEUVRE

(30) Priorität: 10.06.1998 DE 19826200
(43) Veröffentlichungstag der Anmeldung: 31.05.2000
(73) Patentinhaber: SIEMENS AKTIENGESELLSCHAFT, 80333 München (DE)
(72) Erfinder: LIEBETRUTH, Marc, D-13465 Berlin (DE); AHLERT, Torsten, D-15517 Fürstenwalde (DE); GODESA, Ludvik, D-10777 Berlin (DE); DAHL, Uwe, D-14542 Werder (DE)
(86) Internationale Anmeldenummer: PCT/DE1999/001710
(87) Internationale Veröffentlichungsnummer: WO 1999/065124

(56) Entgegenhaltungen:
- EP-A- 0 226 532
- DE-A- 4 211 421
- DE-C- 4 420 581

## Beschreibung

Die Erfindung betrifft ein Schaltgerät mit einer Schaltwelle zur Überführung einer Schaltkontaktanordnung in ihre Schaltstellungen EIN und AUS, einem Anzeigeorgan für die genannten Schaltstellungen sowie mit einer als Schutz gegen eine Fehlbedienung vorgesehenen geradlinig verschiebbar geführten Sperrstange, die Arbeitsflächen für das Zusammenwirken mit dem Anzeigeorgan, mit einer Abschließeinrichtung zur Sperrung des Schaltgerätes in der Stellung AUS, mit einem AUS-Betätiger und mit einem Schutzorgan zur Sicherung des Zuganges zu einer Fahreinrichtung des Schaltgerätes besitzt.

Ein Schaltgerät dieser Art ist durch die DE 44 20 580 C1 bekannt geworden. Hier ist der Zugang eines Werkzeuges zu der Fahreinrichtung durch ein Schutzorgan sperrbar, das in Abhängigkeit von der Stellung der Sperrstange betätigbar ist, wobei die eine der Arbeitsflächen der Sperrstange durch eine Gegenfläche des von der Stellung der Schaltwelle abhängigen Anzeigeorgans überdeckbar ist. Diese Anordnung erfordert vom Benutzer eine Zweihandbedienung. Es muß erst die AUS-Taste gedrückt werden, bevor das der Fahreinrichtung zugeordnete Schutzorgan geöffnet, beziehungsweise die Abschließvorrichtung betätigt werden kann.

Der Erfindung liegt ausgehend hiervon die Aufgabe zugrunde, die Sicherheitseinrichtung, die den Zusammenhang zwischen dem AUS-Betätiger und den Einrichtungen zum Ein- und Ausfahren sowie zum Abschließen des Schaltgerätes herstellt, mittels einer einfachen und zwangsläufig wirkenden Vorrichtung zu verwirklichen. Die Vorrichtung soll zwangsläufig wirken und ohne Hilfsenergie betriebsfähig sein. Sie soll bei leichter Bedienbarkeit raumsparend und einfach zu montieren sein.

Diese Aufgabe wird gemäß der vorliegenden Erfindung dadurch gelöst, daß die Sperrstange ein Kurvenelement aufweist und daß der als Taste ausgebildete AUS-Betätiger einen mit dem Kurvenelement zusammenwirkenden Mitnehmer besitzt, derart, daß durch eine Verschiebung der Sperrstange der AUS-Betätiger in seine wirksame Stellung überführbar ist.

Damit wird erreicht, daß jede Verschiebung der Sperrstange, die der Schaltstellung AUS des Schaltgerätes entspricht, zugleich zwangsläufig den AUS-Betätiger in seine aktive, d.h. die AUS-Stellung überführt. Dies befreit nicht nur den Benutzer von der bisher erforderlichen gesonderten Bedienung des AUS-Betätigers, sondern verdeutlicht auch anschließend dauerhaft den besonderen Betriebszustand des Schaltgerätes. Jede weitere mit dem Schaltgerät befaßte Person erkennt somit anhand der Stellung des AUS-Betätigers sofort den Betriebszustand des Schaltgerätes und braucht den AUS-Betätiger nicht probeweise zu betätigen, wie dies bisher erforderlich war.

Für die Zwecke der Erfindung eignen sich insbesondere AUS-Betätiger mit einer Taste, die außermittig angeordnete Schwenkzapfen aufweist und wippenartig ausgebildet ist. Diese Gestaltung erleichtert nämlich das verkantungsfreie Hineinziehen mittels des Kurvenelementes. Die Erfindung kann aber auch in Verbindung mit herkömmlichen parallel geführten Tastern verwendet werden, wenn für eine verkantungsfreie Führung gesorgt ist. In beiden Fällen empfiehlt es sich, das Kurvenelement zur symmetrischen Mitnahme des AUS-Betätigers gabelförmig auszubilden, um eine erhöhte Reibung durch ein Verkanten oder ein Verklemmen der Taste des AUS-Tasters zu vermeiden.

Das grundsätzliche System einer Einschalt- und Leerschaltverhinderung ist in den DE 43 33 828 C1 und DE 44 20 580 C1 im einzelnen beschrieben und wird deshalb hier nicht nochmals näher erläutert.

Bei einer ordnungsgemäßen Funktion des Schaltgerätes kann von einer sicheren Zuordnung zwischen der Stellung des AUS-Betätigers und der Schaltkontaktanordnung ausgegangen werden. Im Falle einer schwerwiegenden Störung, z.B. einer Kontaktverschweißung, kann jedoch bei gedrücktem AUS-Betätiger die Schaltkontaktanordnung geschlossen sein. Aufgrund der starren mechanischen Kopplung der Schaltkontaktanordnung mit der Schaltwelle verbleibt dabei allerdings auch das Anzeigeorgan in Stellung EIN und blockiert damit eine Verschiebung der Sperrstange. Auch in diesem Fall ist bei der erfindungsgemäßen Vorrichtung weder der Zugang zum Fahrantrieb möglich, noch kann der Abschließvorgang getätigt werden. Damit wird die sogenannte Trennerbedingung sichergestellt. Der Zugang zu der Fahreinrichtung kann in bekannter Weise als "Türchen" ausgebildet sein (DE 44 20 581 C1). Dann kehrt die AUS-Taste, je nach dem, ob das "Türchen" eine Vorspannung in die geschlossene Stellung besitzt oder nicht, selbsttätig oder erst nach Schließen des" Türchens" in die Normalstellung zurück.

Die Erfindung wird nachfolgend anhand eines in den Figuren dargestellten bevorzugten Ausführungsbeispiels näher erläutert.

Die Figur 1 zeigt schematisch in perspektivischer Ansicht einen Niederspannungs-Leistungsschalter mit einem Einschubrahmen und Teilen eines Schaltschrankes oder einer Schaltanlage.

Die Figur 2 zeigt einen Schnitt durch den Frontbereich des Niederspannungs-Leistungsschalters mit einer Sperrstange und damit zusammenwirkenden Komponenten des Leistungsschalters, der sich in der Schaltstellung AUS befindet.

Die Figur 3 zeigt in einer der Figur 2 entsprechenden Darstellung die Sperrstange in der ihrer betätigten Stellung, wenn das Schaltgerät in Stellung AUS steht.

Die Figur 4 zeigt, in einer der Figur 3 entsprechenden, jedoch auf die Umgebung eines Anzeigeorgans beschränkten Darstellung, die Sperrstange bei dem Versuch der Betätigung, wenn sich das Schaltgerät in der Schaltstellung EIN befindet.

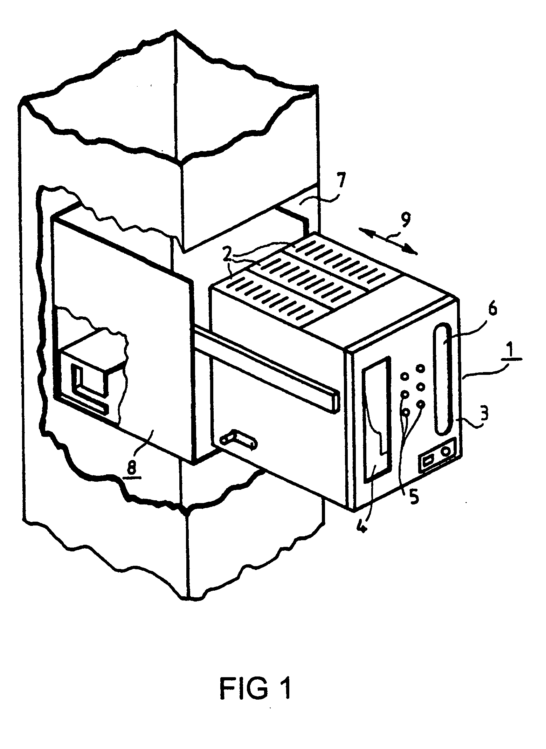

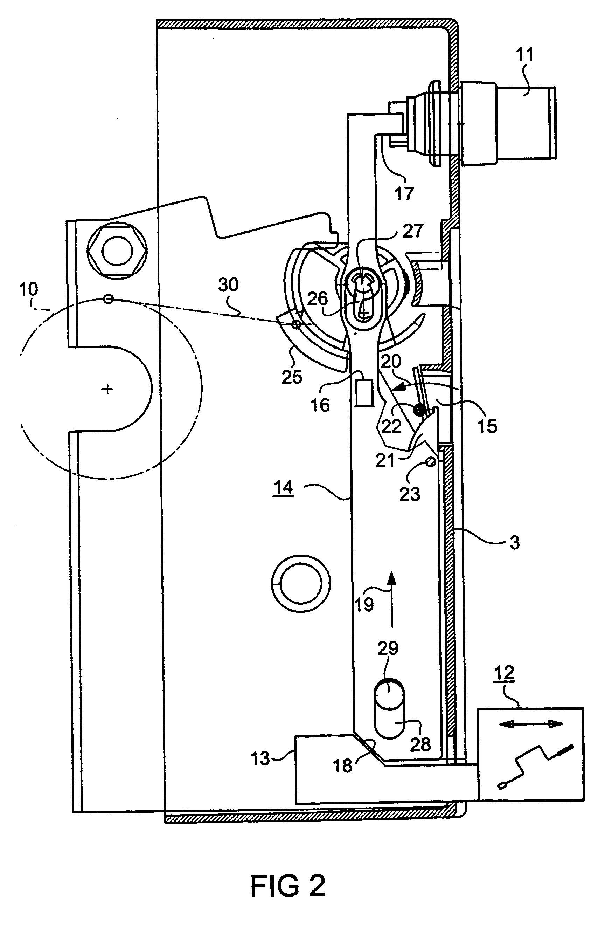

Das in der Figur 1 gezeigte Schaltgerät 1 ist ein Niederspannungs-Leistungsschalter mit Lichtbogenlöschkammern 2, deren Austrittsöffnungen obenliegend angeordnet sind. Ein frontseitiges Bedienungspult 3 weist an der linken Seite das Bedienungsfeld eines elektronischen Überstromauslösers 4, in der Mitte Bedienungs- und Anzeigeelemente 5, zu denen auch ein AUS-Betätiger 15 des Schaltgerätes 1 gehört, und an der rechten Seite einen Handhebel 6 zum Spannen eines Federspeichers auf. Das Schaltgerät 1 ist in eine Schaltzelle 7 eines abgebrochen gezeigten Schaltschrankes oder einer mehrfeldrigen Schaltanlage eingesetzt, in der sich ein Einschubrahmen 8 befindet, und ist mittels einer Fahreinrichtung (12 in Figur 2) in Richtung des Doppelpfeiles 9 ein- beziehungsweise ausfahrbar. Das Schaltgerät 1 kann mittels einer Abschließeinrichtung (11 in Figur 2) abschließbar sein, um sicherzustellen, daß es nicht irrtümlich oder mißbräuchlich in Betrieb genommen werden kann. Gleichzeitig muß die Fahreinrichtung 12 gesperrt werden, was zweckmäßigerweise dadurch geschieht, daß ein Einführen einer als Werkzeug vorgesehenen Kurbel durch ein Schutzorgan (13 in Figur 2) unmöglich gemacht wird.

Die Figur 2 zeigt eine hinter dem Bedienpult 3 des Schaltgerätes 1 vertikal geradlinig verschiebbar geführte Sperrstange 14 im unbetätigten Zustand, in der Schalterstellung "AUS". Diese Schaltstellung wird einem Benutzer durch ein Anzeigeorgan 24 signalisiert, das mittels einer strichpunktiert angedeuteten Koppelstange 30 mit einer zur Betätigung von Schaltkontakten des Schaltgerätes 1 vorgesehenen Schaltwelle 10 verbunden ist. Das Anzeigeorgan 24 ist auf einem Lagerbolzen 27 drehbar angeordnet und besitzt eine konzentrisch zu dem Lagerbolzen 27 angeordnete Gegenfläche 25 zu einer Arbeitsfläche 16 der Sperrstange 14. Das gewünschte Zusammenwirken zwischen der Arbeitsfläche 16 und der Gegenfläche 25 wird zwangsläufig dadurch sichergestellt, daß die Sperrstange 14 zur Führung ein Langloch 26 besitzt, das von dem Lagerbolzen 27 des Anzeigeeorgans 24 durchsetzt wird. Ein zweites Langloch 28 ist am unteren Ende der Sperrstange 14 angeordnet und dient zur Führung auf einem Führungsstift 29.

Die Sperrstange 14 ist zusätzlich am oberen Ende mit einer Arbeitsfläche 17 versehen, die mit der Abschließeinrichtung 11 zusammenwirkt sowie mit einer Arbeitsfläche 18 am unteren Ende, die mit dem Schutzorgan 13 der Fahreinrichtung 12 zusammenarbeitet. Als weitere Arbeitsfläche der Sperrstange 14 wirkt ein Kurvenelement 21, das in einer noch zu beschreibenden Weise mit einem als Drucktaster ausgebildeten AUS-Betätiger 15 zusammenwirkt. Der AUS-Betätiger 15 ist wippenartig ausgebildet und besitzt Mitnehmer 22 sowie außermittig angeordnete Schwenkzapfen 23.

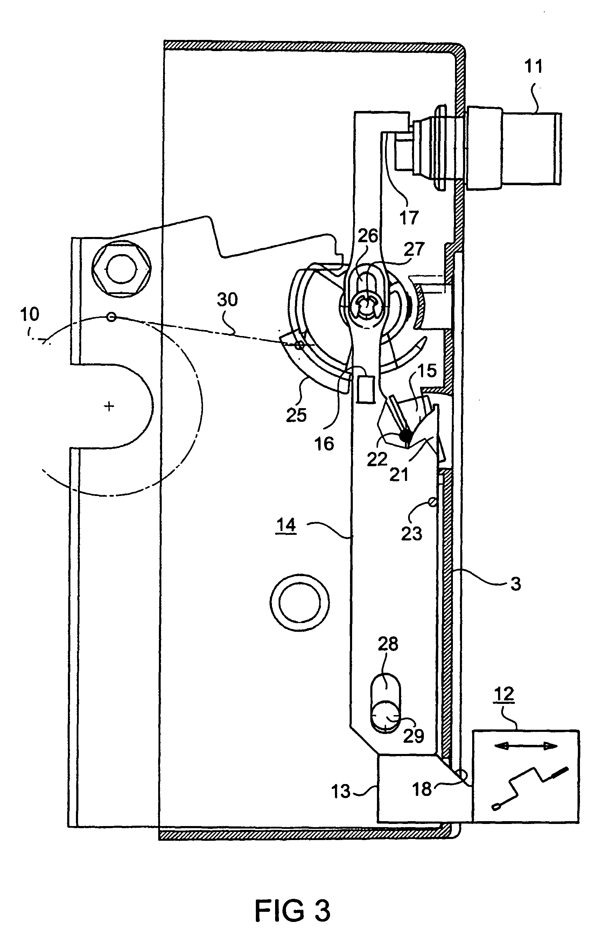

Wie näher die Figur 2 zeigt, stehen die Mitnehmer 22 den vorzugsweise symmetrisch gabelförmig angeordneten Kurvenelementen 21 derart gegenüber, daß eine Verschiebung der Sperrstange 14 in der Richtung eines Pfeiles 19 eine Schwenkung des AUS-Betätigers 15 um seine Schwenkzapfen 23 in Richtung eines Pfeiles 20 bewirkt. In der Endstellung dieses Vorganges ist die Anordnung gemäß der Figur 2 in der Figur 3 dargestellt. Die Verschiebung der Sperrstange 14 in der Richtung des Pfeiles 19 kann dabei insbesondere mittels der Arbeitsfläche 17 durch die Abschließeinrichtung 11 oder mittels der Arbeitsfläche 18 durch eine Verschiebung des Schutzorgans 13 zwecks Betätigung der Fahreinrichtung 12 bewirkt worden sein.

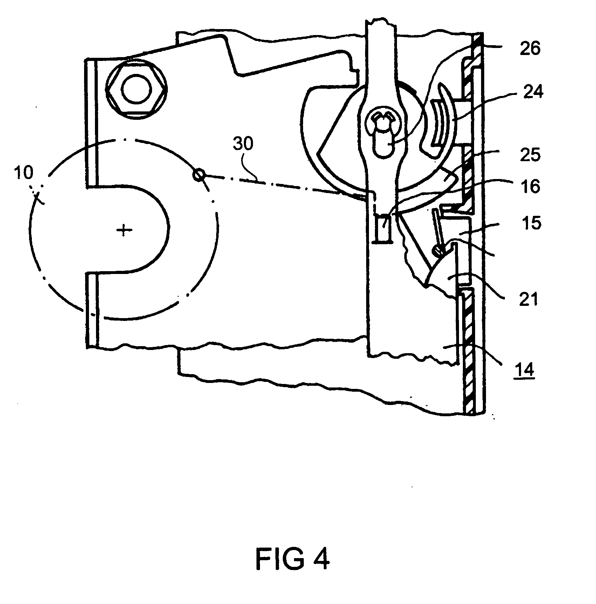

Die Figur 4 zeigt den Zustand, daß sich das Schaltgerät 1 in der Schaltstellung EIN befindet und der Versuch unternommen wird, die Abschließeinrichtung 11 oder das Schutzorgan 13 zu betätigen. In diesem Zustand ist das Anzeigeorgan 24 durch seine Kopplung mit der Schaltwelle 10 derart gegenüber seiner in den Figuren 2 und 3 gezeigten Stellung gedreht, daß die am Umfang des Anzeigeorgans 24 befindliche Gegenfläche 25 der Arbeitsfläche 16 der Sperrstange 14 gegenübersteht. Bei dem Versuch, die Abschließeinrichtuung 11 zu betätigen, stößt die Arbeitsfläche 16 nach Durchlaufen eines geringen toten Ganges gegen die Gegenfläche 25. Die Sperrstange 14 kann somit nicht in die Stellung gemäß der Figur 3 gebracht werden. In der gleichen Weise wird verhindert, daß das Schutzorgan 13 die in der Figur 3 gezeigte Position einnehmen kann. Somit besteht kein Zugang zu der Fahreinrichtung 12.

## Patentansprüche

1. Schaltgerät (1) mit einer Schaltwelle (10) zur Überführung einer Schaltkontaktanordnung in ihre Schaltstellungen EIN und AUS, einem Anzeigeorgan (24) für die genannten Schaltstellungen sowie mit einer als Schutz gegen eine Fehlbedienung vorgesehenen, geradlinig verschiebbar geführten Sperrstange (14), die Arbeitsflächen (16, 17, 18) für das Zusammenwirken mit dem Anzeigeorgan (24), mit einer Abschließeinrichtung (11) zur Sperrung des Schaltgerätes (1) in der Stellung AUS, mit einem AUS-Betätiger (15) und mit einem Schutzorgan (13) zur Sicherung des Zuganges zu einer Fahreinrichtung (12) des Schaltgerätes (1) besitzt,
**dadurch gekennzeichnet, daß**
die Sperrstange (14) ein Kurvenelement (21) aufweist und daß der als Taste ausgebildete AUS-Betätiger (15) einen mit dem Kurvenelement (21) zusammenwirkenden Mitnehmer (22) besitzt, derart, daß durch eine Verschiebung der Sperrstange (14) der AUS-Betätiger (15) in seine wirksame Stellung überführbar ist.

2. Schaltgerät nach Anspruch 1,
**dadurch gekennzeichnet, daß**
eine Taste des AUS-Betätigers (15) mit außermittig angeordneten Schwenkzapfen (23) versehen und wippenartig ausgebildet ist.

3. Schaltgerät nach Anspruch 1,
**dadurch gekennzeichnet, daß**
die Taste des AUS-Betätigers (15) als parallel verschiebbar geführte Drucktaste ausgebildet ist.

4. Schaltgerät nach Anspruch 2 oder 3,
**dadurch gekennzeichnet, daß**
das Kurvenelement (21) der Sperrstange (14) zur symmetrischen Mitnahme des AUS-Betätigers (15) gabelförmig ausgebildet ist.

5. Schaltgerät nach einem der vorangehenden Ansprüche
**dadurch gekennzeichnet, daß**
die Sperrstange (14) mittels eines Langloches (26) auf einem die Drehachse des Anzeigeorgans (24) bildenden Lagerbolzen (27) verschiebbar geführt ist.

## Claims

1. Switching device (1) having a switching shaft (10) for the purpose of moving a switching contact arrangement into its switching positions ON and OFF, having a display member (24) for the mentioned switching positions and having a locking bar (14), which is provided as protection against incorrect operation, is guided such that it can be displaced in a straight line and has working faces (16, 17, 18) for the purpose of interacting with the display member (24), having a close-off device (11) for blocking the switching device (1) in the OFF position, having an OFF actuator (15) and having a protective member (13) for the purpose of securing the access to a moving device (12) of the switching device (1), **characterized in that** the locking bar (14) has a cam element (21), and **in that** the OFF actuator (15) in the form of a button has a driver (22) interacting with the cam element (21) such that, owing to a displacement of the locking bar (14), the OFF actuator (15) can be moved into its effective position.

2. Switching device according to Claim 1, **characterized in that** a button of the OFF actuator (15) is provided with eccentrically arranged pivot journals (23) and is in the form of a rocker.

3. Switching device according to Claim 1, **characterized in that** the button of the OFF actuator (15) is in the form of a pushbutton which is guided such that it can be displaced parallel.

4. Switching device according to Claim 2 or 3, **characterized in that** the cam element (21) of the locking bar (14) for symmetrically entraining the OFF actuator (15) is in the form of a fork.

5. Switching device according to one of the preceding claims, **characterized in that** the locking bar (14) is guided displaceably by means of a slot (26) on a bearing bolt (27) forming the axis of rotation of the display member (24).

## Revendications

1. Appareil de commutation (1) comprenant un arbre de commutation (10) pour transférer un agencement de contacts de commutation dans ses positions de commutation MARCHE et ARRET, un organe indicateur (24) pour les positions de commutation citées, ainsi qu'une barre de blocage (14) en guise de protection à l'encontre d'une fausse manoeuvre, qui est guidée en coulissement rectiligne et possède des surfaces de travail (16, 17, 18) pour coopérer avec l'organe indicateur (24), avec un mécanisme de verrouillage (11) pour bloquer l'appareil de commutation (1) dans la position ARRET, avec un actionneur d'ARRET (15), et avec un organe de protection (13) pour sécuriser l'accès à un dispositif de déplacement (12) de l'appareil de commutation (1),
**caractérisé en ce que** la barre de blocage (14) présente un élément de came (21), et **en ce que** l'actionneur d'ARRET (15) réalisé sous la forme d'un poussoir, possède un entraîneur (22) coopérant avec l'élément de came (21) de façon telle que par un coulissement de la barre de blocage (14), l'actionneur d'ARRET (15) puisse être transféré dans sa position active.

2. Appareil de commutation selon la revendication 1,
**caractérisé en ce qu'**un poussoir de l'actionneur d'ARRET (15) est pourvu de tourillons de pivotement (23) agencés de manière décentrée, et est réalisé à la manière d'une bascule.

3. Appareil de commutation selon la revendication 1,
**caractérisé en ce que** le poussoir de l'actionneur d'ARRET (15) est réalisé en tant que bouton poussoir guidé en coulissement parallèle.

4. Appareil de commutation selon la revendication 2 ou 3,
**caractérisé en ce que** l'élément de came (21) de la barre de blocage (14) est réalisé en forme de fourchette, en vue d'assurer un entraînement symétrique de l'actionneur d'ARRET (15).

5. Appareil de commutation selon l'une des revendications précédentes,
**caractérisé en ce que** la barre de blocage (14) est guidée en coulissement, au moyen d'un trou oblong (26), sur un tourillon de palier (27) formant l'axe de rotation de l'organe indicateur (24).
